# EUROPÄISCHE PATENTSCHRIFT

(11) **EP 2 466 167 B1**
(45) Veröffentlichungstag und Bekanntmachung des Hinweises auf die Patenterteilung: **02.09.2020**
(21) Anmeldenummer: 11009147.7
(22) Anmeldetag: 18.11.2011
(51) Int. Cl.: F16F 1/12, B60G 11/16, B60G 11/15, F16F 9/38

(54) **Federunterlage für eine freistehende Tragfeder eines Kraftfahrzeugs**
Spring pad for a free-standing bearing spring of a vehicle
Support à ressort pour un ressort de suspension libre d'un véhicule automobile

(30) Priorität: 18.12.2010 DE 102010055141
(43) Veröffentlichungstag der Anmeldung: 20.06.2012
(73) Patentinhaber: Audi AG, 85045 Ingolstadt (DE)
(72) Erfinder: Schmitt, Joachim, 85051 Ingolstadt (DE)
(74) Vertreter: Bauer, Dominik Michael

(56) Entgegenhaltungen:
- EP-A1- 2 186 661
- DE-U- 6 610 815
- JP-A- S 563 330
- JP-A- 2011 037 297
- JP-U- S5 635 405
- US-A1- 2006 108 761

## Beschreibung

Die Erfindung betrifft eine Federunterlage für eine freistehende Tragfeder eines Kraftfahrzeugs gemäß der im Oberbegriff des Patentanspruches 1 angegebenen Art.

Derartige Federunterlagen zur oberen bzw. unteren Abstützung der Tragfeder eines Kraftfahrzeugs sind hinreichend bekannt. Lediglich beispielhaft wird auf die EP 0 924 445 B1 verwiesen.

Kennzeichnend für Federunterlagen für freistehende Tragfedern ist, dass diese starr mit den Achsbauteilen und/oder der Karosserie verbunden sind. Bei den meisten Achskonzepten, z. B. Mehrlenkerachsen, Trapezlenkerachsen, Verbundlenkerachsen etc. tritt über den Federweg eine Veränderung der Winkel der Federunterlagen zueinander auf. Der resultierende Kippwinkel prägt der Tragfeder eine Verformung auf, welche sich nachteilig auf Knickverhalten und Bauteilbeanspruchung auswirken.

Eine gattungsgemäße, sämtliche Merkmale des Oberbegriffs des Anspruches 1 aufweisende Federunterlage für eine freistehende Tragfeder eines Kraftfahrzeugs ist aus der JP S56 3330 A und JP S56 35405 U bekannt.

Der Erfindung liegt die Aufgabe zu Grunde, eine Federunterlage gemäß der im Oberbegriff des Patentanspruches 1 angegebenen Art weiterzubilden, dass eine verbesserte Knicksicherheit der Tragfeder sowie eine geringere Bauteilbelastung gewährleistet ist.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

In bekannter Art und Weise umfasst die Federunterlage für eine freistehende Tragfeder eines Kraftfahrzeugs eine der Tragfeder zugewandte Federaufnahmeseite und eine, der Federaufnahmeseite gegenüberliegend angeordnete, Befestigungsseite. Über die Befestigungsseite ist die Federunterlage an einem Kraftfahrzeugbauteil befestigt. Die Formulierung Kraftfahrzeugbauteil ist hierbei ganz allgemein als Achsbauteil und/oder ein Kraftfahrzeugkarosseriebauteil zu verstehen.

Die Befestigungsseite der Federunterlage ist dabei kippbar an dem Kraftfahrzeugbauteil befestigt. Hierzu weist die Befestigungsseite der Federunterlage eine Kippachse in Form einer stegförmig ausgebildeten Erhebung auf, über die die Befestigungsseite kippbar in Kontakt mit dem Kraftfahrzeugbauteil steht. Durch die kippbare Ausgestaltung der Federunterlage ist sichergestellt, dass die beim Ein- bzw. Ausfedern auftretende Winkelveränderung der Federunterlagen zueinander ganz oder teilweise kompensierbar sind. D.h. der nach dem Stand der Technik auftretende resultierende Kippwinkel beim Ein- bzw. Ausfedern und die damit bedinge Verformung der Tragfeder findet nicht bzw. nur noch im geringen Maße statt. Hierdurch bedingt ergibt sich eine verbesserte Knicksicherheit der Tragfedern. Weiterhin ist die Bauteilbelastung geringer, d.h. die Tragfeder kann schwächer dimensioniert und damit leichter und kostengünstiger ausgeführt werden. Zudem tritt aufgrund der Kippwinkelkompensation ein geringeres Ausbeulen bzw. eine geringere Bogenverformung der Tragfeder auf, so dass weniger Bauraum benötigt wird.

Erfindungsgemäß weist die Befestigungsseite der Federunterlage einen in Form einer weiterer Erhebung ausgebildeten Stützbund auf, dessen maximale Erhebungshöhe der stegförmig ausgebildeten Erhebung entspricht, wobei die Befestigungsseite über den Stützbund lediglich bereichsweise in Kontakt mit dem Kraftfahrzeugbauteil steht. Der Stützbund hat den Effekt, dass eine Beeinflussung der Kippbewegung bzw. Kipprichtung sowie des Kippwinkels ermöglicht ist. Ist beispielsweise erwünscht, eine Kippbewegung um die Kippachse nur in eine Richtung zu ermöglichen, kann dies auf eine einfache Art und Weise durch eine entsprechende Ausbildung des Stützbundes erfolgen; nämlich Ausbildung der Stützbundes in der Gestalt, dass der Stützbund nur im Bereich der gewünschten Kipprichtung eine im Vergleich zur stegförmig ausgebildeten Erhebung (= Kippachse) geringere Höhe aufweist, während der der gewünschten Kipprichtung gegenüberliegende Bereich des Stützbundes eine der stegförmig ausgebildeten Erbebung entsprechende Höhe aufweist. Die Einstellung des Kippwinkels ist entsprechend über die Erhebungshöhe des Stützbunds einstellbar. Wahlweise ist auch ein beidseitiges Kippen durch entsprechende beidseitige Gestaltung des Stützbundes darstellbar.

Um bei der Kippbewegung ein Eintritt von Wasser- und/oder Schmutz zwischen Federunterlage und Kraftfahrzeugbauteil zu vermeiden, weist die Federunterlage eine umlaufend angeordnete, in Richtung auf das Kraftfahrzeugbauteil ausgerichtete Dichtlippe auf.

Gemäß einer weiteren Ausführungsform der Erfindung weist die Befestigungsseite der Federunterlage eine Verdrehsicherung auf, um einen orientierten Einbau der Federunterlage sowie eine sicher bestimmten Lage im Betrieb zu gewährleisten.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

Die Erfindung wird im Folgenden anhand des in der Zeichnung dargestellten Ausführungsbeispiels näher beschrieben.

In der Beschreibung, in den Ansprüchen und in der Zeichnung werden die in der unten aufgeführten Liste der Bezugzeichen verwendeten Begriffe und zugeordneten Bezugzeichen verwendet.

In der Zeichnung bedeutet:
- Fig. 1: eine Schnittdarstellung einer freistehenden Tragfeder eines Kraftfahrzeugs zwischen zwei erfindungsgemäßen Federunterlagen in Konstruktionslage;
- Fig. 2: eine vergrößerte Darstellung der Federunterlagen aus Fig. 1;
- Fig. 3: die Federunterlagen und die Tragfeder aus Fig. 1 im ausgefederten Zustand, und
- Fig. 4: die Federunterlagen und die Tragfeder aus Fig. 1 im eingefederten Zustand.

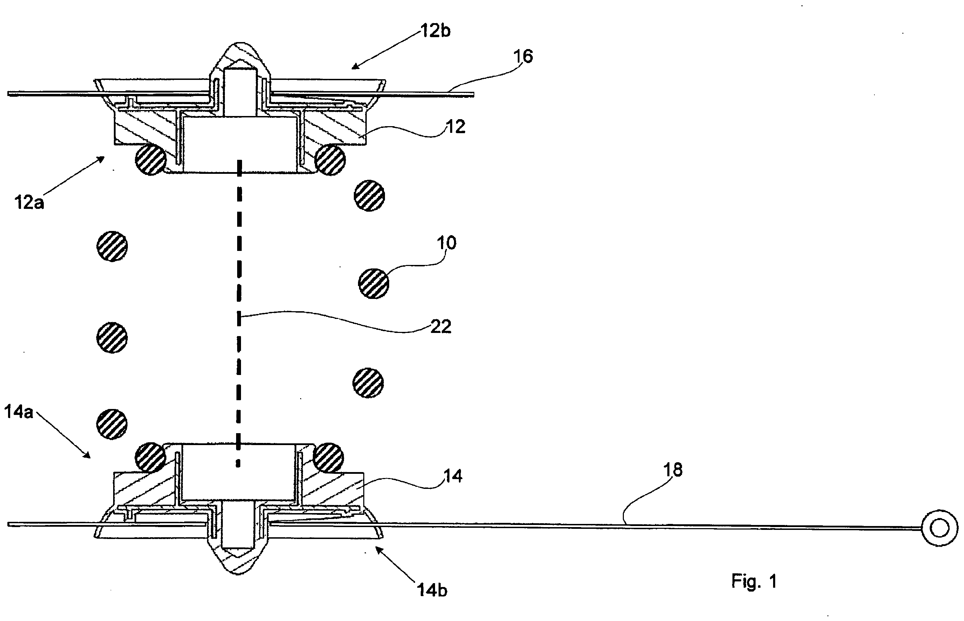

Fig. 1 zeigt in einer schematischen Darstellung eine freistehende Tragfeder 10, die zwischen einer oberen Federunterlage 12 sowie einer unteren Federunterlage 14 angeordnet ist.

Während die Tragfeder 10 jeweils über eine Federaufnahmeseite 12a bzw. 14a an der oberen bzw. unteren Federunterlage 12, 14 anliegt, ist die obere Federunterlage 12 über eine Befestigungsseite 12b an einem Karosseriebauteil 16 und die untere Federunterlage 14 über eine Befestigungsseite 14b an einem Achsbauteil 18 befestigt.

Um einen festen Federsitz der Tragfeder 10 zu gewährleisten, ist in den Federaufnahmeseiten 12a, 14a jeweils eine Federaufnahmekontur 20 mit Verrastung ausgebildet.

Die in Fig. 1 dargestellte gestrichelte Linie 22 symbolisiert die Lage der Kraftwirkungslinie der Tragfeder 10 in Konstruktionslage, d.h. im ungefederten Zustand.

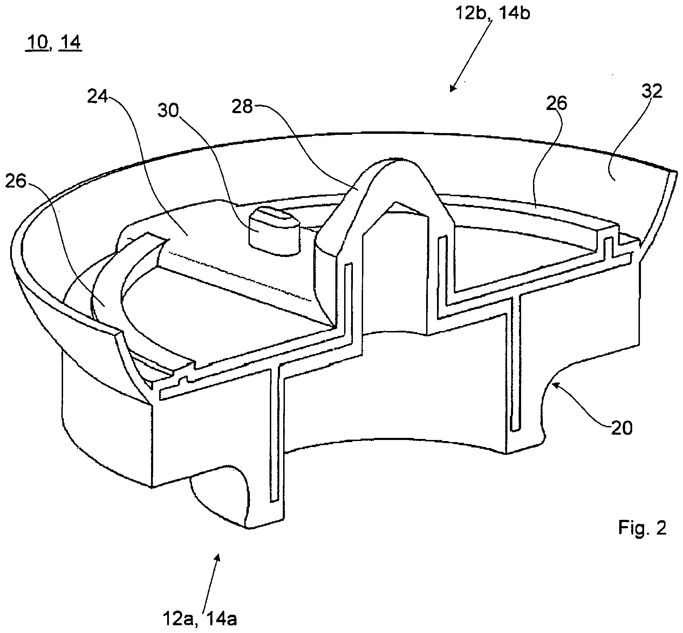

Wie insbesondere aus Fig. 2 ersichtlich, weist die Befestigungsseite 12b, 14b der Federunterlage 12, 14 eine stegförmig ausgebildete Erhebung 24 sowie ein, ebenfalls in Form einer weitere Erhebung ausgebildeter Stützbund 26 auf. Der Stützbund 26 ist in einem Teilbereich, wahlweise beidseitig, abgesenkt ausgebildet und weist eine Erhebungshöhe auf, die maximal der stegförmigen Erhebung 24 entspricht.

Wie Fig. 2 weiter zu entnehmen ist, weist die Befestigungsseite 12b, 14b der Federunterlage 12, 14 neben einem Zentrierzapfen 28 zur Aufnahme an Karosseriebauteil 16 bzw. Achsbauteil 18, eine Verdrehsicherung 30 auf, um einen orientierten Einbau und eine sicher bestimmte Lage im Betrieb zu gewährleisten. Zur Minimierung von Schmutz- und Wassereintrag ist zudem am Federteller 12, 14 eine umlaufende Dichtlippe 32 angeordnet.

In Konstruktionslage, vgl. Fig. 1, liegt somit die Federunterlage 12, 14 über die stegförmige Erhebung 24, die nachfolgend eine Kippachse bildet, mit dem Karosseriebauteil 16 bzw. dem Achsbauteil 18 an. Zudem ist der Federteller 12, 14 über den Stützbund 26 bereichsweise am Karosseriebauteil 16 bzw. Achsbauteil 18 abgestützt.

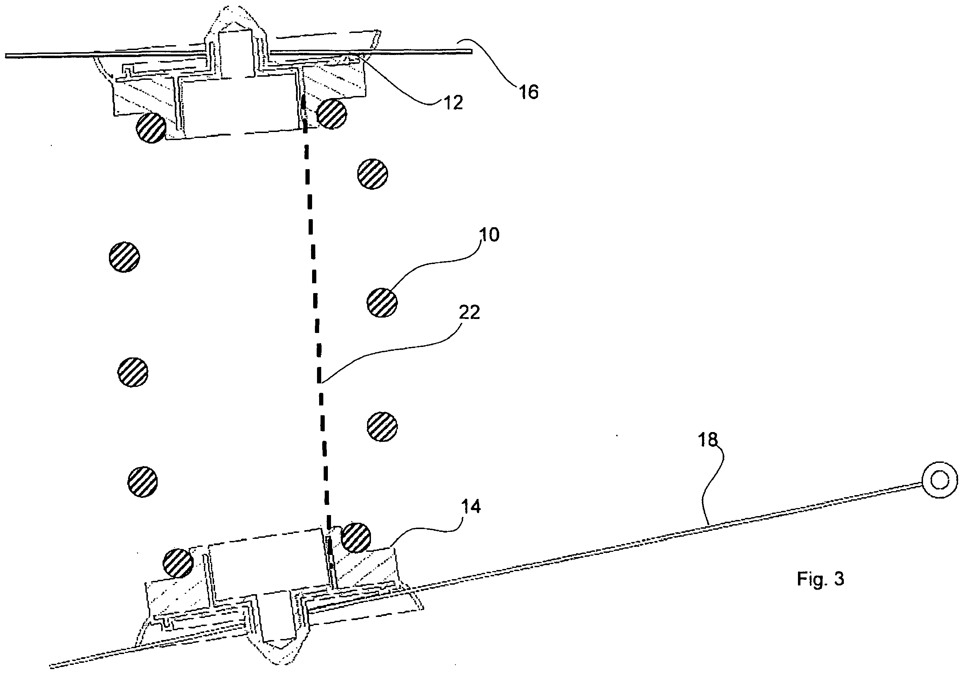

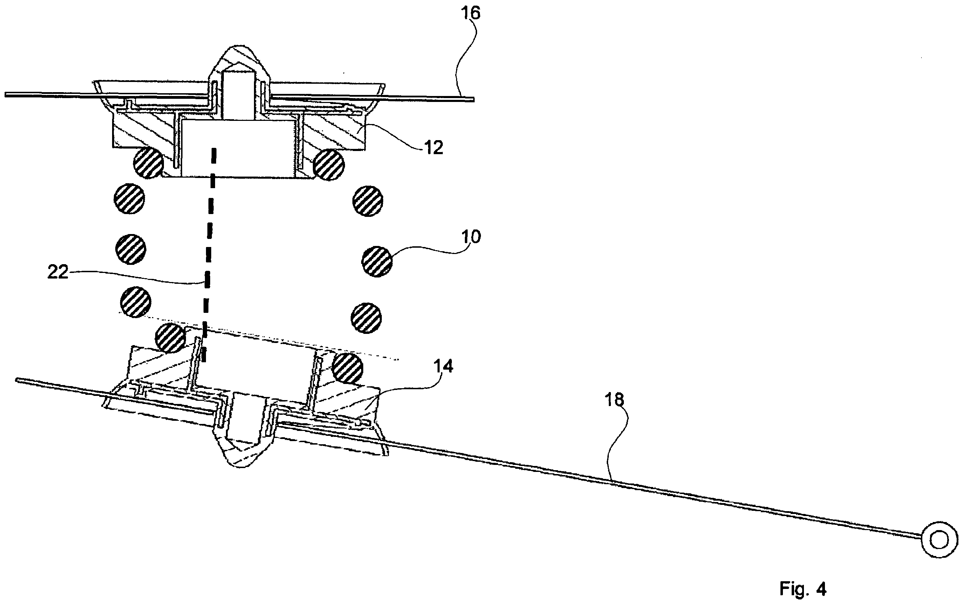

Die Funktion der erfindungsgemäßen Federunterlage beim Aus- und Einfedern ist aus Fig. 3 und 4 ersichtlich:
Eine Bewegung des Achsbauteils 18 nach unten (Ausfedern) hat ein Wandern der Kraftwirkungslinie 20 aus der Mitte nach rechts zur Folge, vgl. Fig.3. Aufgrund der an der Befestigungsseite 12b, 14b jeweils ausgebildeten stegförmigen Erhebung 24 bewirkt die gewanderte Kraftwirkungslinie 20 ein Kippen der Federunterlage 12, 14 um die stegförmige Erhebung 24 nach rechts. D.h. die Kippbewegung der Federteller 12, 14 wirkt der beim Ausfedern zu beobachtenden Veränderung der Winkel der beiden Federunterlagen zueinander entgegen.

Wie aus Fig. 4 ersichtlich, wandert beim Einfedern die Kraftwirkungslinie 20 nach links, was wiederum eine entsprechende Kippwirkung verursachen würde. Die tritt vorliegend jedoch nicht auf, da der Stützbund 26 auf der linken Seite eine der stegförmigen Erhebung entsprechende Erhebungshöhe aufweist. Wahlweise ist durch entsprechende Gestaltung der Befestigungsseite auch beim Einfedern eine Kippwinkelkompensation darstellbar.

Eine Umkehr der Kipprichtung durch 180° gedrehten Verbau oder angepasste Gestaltung der Befestigungsseite ist wahlweise möglich.

### Bezugszeichenliste

- 10: Tragfeder
- 12: Federteller oben
- 12a: Federaufnahmeseite des oberen Federtellers
- 12b: Befestigungsseite des oberen Federtellers
- 14: Federteller unten
- 14a: Federaufnahmeseite des unteren Federtellers
- 14b: Befestigungsseite des unteren Federtellers
- 16: Karosseriebauteil
- 18: Achsbauteil
- 20: Federaufnahmekontur
- 22: Wirkungslinie
- 24: stegförmige Erhebung
- 26: Stützbund
- 28: Zentrierzapfen
- 30: Verdrehsicherung
- 32: Dichtlippe

## Patentansprüche

1. Federunterlage (12, 14) für eine freistehende Tragfeder (10) eines Kraftfahrzeugs, mit einer der Tragfeder zugewandten Federaufnahmeseite (12a 14a) und einer der Federaufnahmeseite (12a, 14a) gegenüberliegenden Befestigungsseite (12b, 14b), über die die Federunterlage (12, 14) an einem Kraftfahrzeugbauteil (16, 18) befestigt, wobei die Befestigungsseite (12b, 14b) der Federunterlage (12, 14) eine Kippachse in Form einer stegförmig ausgebildeten Erhebung (24) aufweist, über die die Befestigungsseite (12b, 14b) kippbar in Kontakt mit dem Kraftfahrzeugbauteil (16, 18) steht, **dadurch gekennzeichnet, dass** die Befestigungsseite (12b, 14b) der Federunterlage (12, 14) einen in Form einer weiteren Erhebung ausgebildeten Stützbund (26) aufweist, dessen maximale Erhebungshöhe der stegförmig ausgebildeten Erhebung (24) entspricht, wobei die Befestigungsseite (12b, 14b) über den Stützbund (26) lediglich bereichsweise in Kontakt mit dem Kraftfahrzeugbauteil (16, 18) steht.

2. Federunterlage (12, 14) für eine freistehende Tragfeder nach einem der vorgenannten Ansprüche, **dadurch gekennzeichnet, dass** die Federunterlage (12, 14) eine umlaufende Dichtlippe (32) aufweist.

3. Federunterlage (12, 14) für eine freistehende Tragfeder nach einem der vorgenannten Ansprüche, **dadurch gekennzeichnet, dass** die Befestigungsseite (12b, 14b) eine Verdrehsicherung (30) aufweist.

## Claims

1. Spring pad (12, 14) for a free-standing supporting spring (10) of a motor vehicle, comprising a spring-receiving side (12a, 14a) facing the supporting spring and a fastening side (12b, 14b) opposite the spring-receiving side (12a, 14a), via which the spring pad (12, 14) is fastened to a motor vehicle component (16, 18), wherein the fastening side (12b, 14b) of the spring pad (12, 14) has a tilt axis in the form of a strip-shaped elevation (24), via which the fastening side (12b, 14b) is in tiltable contact with the motor vehicle component (16, 18), **characterised in that** the fastening side (12b, 14b) of the spring pad (12, 14) has a support flange (26) designed in the form of a further elevation, the maximum elevation height of which corresponds with the strip-shaped elevation (24), wherein the fastening side (12b, 14b) is only in contact in some regions with the motor vehicle component (16, 18) via the support flange (26).

2. Spring pad (12, 14) for a free-standing supporting spring according to one of the preceding claims, **characterised in that** the spring pad (12, 14) has a circumferential sealing lip (32).

3. Spring pad (12, 14) for a free-standing supporting spring according to one of the preceding claims, **characterised in that** the fastening side (12b, 14b) has an anti-rotation device (30).

## Revendications

1. Support de ressort (12, 14) pour un ressort de support libre (10) d'un véhicule automobile, avec un côté de réception du ressort (12a, 14a) tourné vers le ressort de support et un côté de fixation (12b, 14b) opposé au côté de réception du ressort (12a, 14a), au moyen duquel le support de ressort (12, 14) est fixé à un élément de véhicule automobile (16, 18), le côté de fixation (12b, 14b) du support de ressort (12, 14) présentant un axe de basculement sous la forme d'une élévation (24) en forme de bande, au moyen duquel le côté de fixation (12b, 14b) est en contact basculant avec l'élément de véhicule automobile (16, 18), **caractérisé en ce que** le côté de fixation (12b, 14b) du support de ressort (12, 14) présente un collier d'appui (26) conçu sous la forme d'une autre élévation, dont la hauteur d'élévation maximale correspond à l'élévation (24) en forme de bande, le côté de fixation (12b, 14b) n'étant en contact avec l'élément de véhicule automobile (16, 18) que partiellement par l'intermédiaire du collier d'appui (26).

2. Support de ressort (12, 14) pour un ressort de support libre selon l'une quelconque des revendications précédentes, **caractérisé en ce que** le support de ressort (12, 14) présente une lèvre d'étanchéité circonférentielle (32).

3. Support de ressort (12, 14) pour un ressort de support libre selon l'une quelconque des revendications précédentes, **caractérisé en ce que** le côté de fixation (12b, 14b) présente une sécurité antirotation (30).
